# EUROPÄISCHE PATENTSCHRIFT

(11) **EP 1 797 449 B1**
(45) Veröffentlichungstag und Bekanntmachung des Hinweises auf die Patenterteilung: **06.06.2012**
(21) Anmeldenummer: 05761178.2
(22) Anmeldetag: 11.07.2005
(51) Int. Cl.: G01S 13/93, G01S 7/03, G01S 13/87, G01S 13/58, G01S 13/34, G01S 7/40

(54) **RADARSENSOR FÜR KRAFTFAHRZEUGE**
RADAR SENSOR FOR MOTOR VEHICLES
CAPTEUR RADAR POUR AUTOMOBILES

(30) Priorität: 29.09.2004 DE 102004047086
(43) Veröffentlichungstag der Anmeldung: 20.06.2007
(73) Patentinhaber: ROBERT BOSCH GMBH, 70442 Stuttgart (DE)
(72) Erfinder: MAYER, Hermann, 71665 Vaihingen (DE); LUCAS, Bernhard, 74354 Besigheim (DE); HILSEBECHER, Joerg, 70839 Gerlingen (DE); HAUK, Joachim, 71272 Renningen-Malmsheim (DE); HAFFMANS, Paco, 71032 Boeblingen (DE)
(86) Internationale Anmeldenummer: PCT/EP2005/053310
(87) Internationale Veröffentlichungsnummer: WO 2006/034888

(56) Entgegenhaltungen:
- EP-A- 0 939 322
- WO-A-03/104833
- WO-A-2004/005959

## Beschreibung

### Stand der Technik

Die Erfindung betrifft einen Radarsensor für Kraftfahrzeuge, mit mindestens einer Sende- und Empfangseinrichtung zum Senden und Empfangen eines frequenzmodulierten Radarsignals und einer-Auswerteeinrichtung zur Berechnung der Abstände und Relativgeschwindigkeiten der georteten Objekte.

Solche Radarsensoren werden in Kraftfahrzeugen häufig im Rahmen eines Fahrerassistenzsystems eingesetzt, beispielsweise eines ACC-Systems (Adaptive Cruise Control) für eine automatische, radargestützte Abstandsregelung.

Ein typisches Beispiel für einen Radarsensor der oben genannten Art ist ein FMCW-Radar (Frequency Modulated Continuous Wave), bei dem die Frequenz des gesendeten Radarsignals periodisch mit einer bestimmten Rampensteigung moduliert wird. Die Frequenz eines Signals, das an einem Radarziel reflektiert wurde und dann zu einem bestimmten Zeitpunkt wieder von der Radarantenne empfangen wird, unterscheidet sich von der Frequenz des zu diesem Zeitpunkt gesendeten Signals somit durch einen Betrag, der einerseits von der Signallaufzeit und damit vom Abstand des Radarziels und andererseits von der Dopplerverschiebung und damit von der Relativgeschwindigkeit des Radarziels abhängig ist. Im Radarsensor wird das empfangene Signal in einem Mischer mit dem zu diesem Zeitpunkt gesendeten Signal gemischt, so daß man als Mischprodukt ein niederfrequentes Signal erhält, dessen Frequenz dem Frequenzunterschied zwischen dem gesendeten und dem empfangenen Signal entspricht. Dieses niederfrequente Signal wird dann im Analog/Digital-Wandler mit einer geeigneten Zeitauflösung digitalisiert. Die digitalisierten Daten werden über eine bestimmte Aufzeichnungsperiode aufgezeichnet, die beispielsweise der Länge der Rampe entspricht, mit der das gesendete Signal moduliert wird. Aus dem so erhaltenen Datensatz wird dann durch einen Algorithmus, der als "schnelle Fouriertransformation" (FFT) bekannt ist, ein Spektrum gebildet. In diesem Spektrum wird jedes erfaßte Radarziel durch einen Peak repräsentiert, der sich mehr oder weniger deutlich vom Rauschpegel abhebt. Durch Wiederholung dieser Prozedur mit unterschiedlichen Rampensteigungen ist es möglich, die Mehrdeutigkeit zwischen der laufzeitbedingten Frequenzverschiebung und der Dopplerverschiebung zu beseitigen, so daß sich der Abstand und die Relativgeschwindigkeit des Radarziels berechnen lassen.

In Kraftfahrzeugen wird zumeist ein winkelauflösender Radarsensor eingesetzt, der mehrere leicht gegeneinander winkelversetzte Radarkeulen erzeugt, und die oben beschriebene Signalaufbereitung und -auswertung erfolgt dann gesondert für jede einzelne Radarkeule, vorzugsweise in parallelen Kanälen.

Aus Gründen der Verkehrssicherheit sollte der Radarsensor eine möglichst verläßliche Ortung von anderen Fahrzeugen und sonstigen Hindernissen ermöglichen. Weiterhin gibt es Bestrebungen, die Funktionalität von Fahrerassistenzsystemen zu erweitern, bis hin zu einer vollständig autonomen Fahrzeugsteuerung als Fernziel. In dem Maße, in dem dem Fahrerassistenzsystem neue und zunehmend komplexere Aufgaben übertragen werden, steigen auch die Anforderungen an die Verläßlichkeit des Radarsensors.

Aus der EP 0 939 322 A2 ist ein computerisiertes Radarverfahren zur Messung von Abständen und Relativgeschwindigkeiten zwischen einem Fahrzeug und mehreren vor ihm befindlichen Hindernissen bekannt, wobei eine sichere Unterscheidung zwischen tatsächlichen Hindernissen und Scheinhindemissen mit kurzer Auswertezeit durch vier Verfahrensschritte erreicht wird. Dabei wird während der drei ersten Verfahrensschritte jeweils frequenzkonstante Bursts ausgesendet, die in einem Frequenz-Zeit-Diagramm eine linear ansteigende, eine linear abfallende sowie eine frequenzkonstante lineare Folge bilden. Am Ende jedes reflektierenden Bursts, also bei eingeschwungener Phase, wird ein komplexer Abtastwert erfaßt, und in einem Relativgeschwindigkeits-Abstands-Diagramm werden potentielle Hindernisse als Schnittpunkte von Geraden erfaßt, die aus den reflektierten linearen Burstfolgen gewonnen wurden. Mittels einer speziellen Korrelation erfolgt dann im Rechner eine Aussortierung von Geisterhindernissen, und nur die Empfangswerte für die verbleibenden Hindernisse werden weiter verarbeitet.

### Vorteile der Erfindung

Die Erfindung mit den in Anspruch 1 angegebenen Merkmalen bietet den Vorteil, daß die Verläßlichkeit des Radarsensors erhöht wird. Zu diesem Zweck weist der Radarsensor erfindungsgemäß ein integriertes Dopplerradar auf, mit dem die Relativgeschwindigkeiten der georteten Objekte unabhängig gemessen werden können. Auf diese Weise wird die Redundanz des Systems erhöht, und durch Äbgleich der mit Hilfe des Dopplerradars gemessenen Relativgeschwindigkeiten mit den von der Auswerteeinheit anhand des frequenzmodulierten Signals berechneten Relativgeschwindigkeiten lassen sich etwaige Fehler in der Sende- und Empfangseinrichtung und/oder in der Auswerteeinrichtung schnell erkennen, so daß geeignete Gegenmaßnahmen eingeleitet werden können. Darüber hinaus erleichtert die Erfindung die Beseitigung von Mehrdeutigkeiten, insbesondere bei gleichzeitiger Ortung mehrerer Objekte. Bei der Auswertung der Spektren, die mit Hilfe des frequenzmodulierten Signals gewonnen werden, lassen sich somit

Fehlinterpretationen, die insbesondere bei stark verrauschten Signalen leicht auftreten können, schnell und sicher erkennen und beheben.

Vorteilhafte Ausgestaltungen der Erfindung ergeben sich aus den Unteransprüchen.

Ein besonders einfacher und kostengünstiger Aufbau des redundanten Radarsensors läßt sich dadurch erreichen, daß für das Dopplerradarsystem weitgehend Komponenten verwendet werden, die bei dem frequenzmodulierenden Radarsystem, beispielsweise einem FMCW-Radar, ohnehin vorhanden sind.

Zur Erzeugung des Radarsignals für das Dopplerradar wird vorzugsweise ein Referenzoszillator benutzt, der zugleich zur Frequenzregelung bei der Erzeugung des frequenzmodulierten Signals dient.

Der Referenzoszillator wird in einer besonders bevorzugten Ausführungsform durch einen dielektrischen Resonator Oszillator (DRO) gebildet, der bei einer Frequenz arbeitet, deren ganzzahliges Vielfaches in der Nähe des Arbeitsfrequenzbandes des Oszillators liegt, mit dem das frequenzmodulierte Signal erzeugt wird. Wenn beispielsweise das Arbeitsfrequenzband etwa bei 76 bis 77 GHz liegt, so hat der Referenzoszillator eine Frequenz von beispielsweise 12,65 GHz, 19 GHz oder 24,5 GHz, entsprechend einem Sechstel, einem Viertel bzw. einem Drittel der Mittenfrequenz des Arbeitsfrequenzbandes. Für die Zwecke der Frequenzregelung wird dann die in der Nähe des Arbeitsfrequenzbandes liegende Oberwelle des Referenzoszillators einem harmonischen Mischer zugeführt und mit dem frequenzmodulierten Signal gemischt. Das Mischprodukt entspricht dann der Differenz zwischen der modulierten Frequenz und der festen Referenzfrequenz (der Oberwelle) und dient als Rückkopplungssignal für die Frequenzregelung, beispielsweise in einer Phasenregelschleife (PLL; Phase Lockend LP).

Für den Betrieb des Dopplerradarsystems wird die Grundfrequenz des Referenzoszillators unmittelbar als Sendefrequenz benutzt. Bei dieser Ausführungsform braucht somit für das Dopplerradar kein besonderer Oszillator bereitgestellt zu werden. Ein weiterer Vorteil besteht darin, daß die Frequenz des Dopplerradars nur einen Bruchteil der Frequenz des FMCW-Radars beträgt, so daß Störeinflüsse, wie Rauschsignale, Regen oder Schnee und dergleichen sich auf die beiden Radarsysteme unterschiedlich auswirken und somit Störungen des einen Systems mit Hilfe des anderen Systems erkannt und gegebenenfalls kompensiert werden können.

Bei einer typischen Bauform eines winkelauflösenden Radarsensors weist die Antenne mehrere Antennenelemente (Patches) auf, die seitlich gegeneinander versetzt in der Brennebene einer Linse angeordnet sind, so daß die von den einzelnen Patches erzeugten und durch die Linse gebündelten Radarkeulen gegeneinander winkelversetzt sind. Für das Dopplerradarsystem wird bevorzugt dieselbe Linse benutzt, indem in der Brennebene oder etwas versetzt dazu ein zusätzliches Patch angeordnet wird, das an den Referenzoszillator angeschlossen und auf dessen Frequenz abgestimmt ist. Aufgrund stärkerer Beugungseffekte bei der kleineren Frequenz des Referenzoszillators ist die von dem zusätzlichen Patch erzeugte Radarkeule weniger stark gebündelt, so daß mit Hilfe des einzigen zusätzlichen Patches ein weiter Winkelbereich abgedeckt werden kann. Gegebenenfalls kann durch eine leicht defokussierte Anordnung dieses Patches eine zusätzliche Strahlaufweitung erreicht werden.

Bei dem Radarsensor werden die Radarmessungen periodisch wiederholt, typischerweise mit einer Periodendauer in der Größenordnung von 100 ms. Die mehreren Frequenzrampen, mit denen das Signal FMCW-Radars moduliert wird, machen zusammen jedoch nur einen Bruchteil dieser Periodendauer aus, beispielsweise etwa 15 ms. Während der übrigen Zeit, die unter anderem für die Auswertung der Signale benötigt wird, ist eine Frequenzregelung nicht erforderlich, so daß der Referenzoszillator während dieser Zeit als Signalquelle für das Dopplerradar benutzt werden kann.

Auch bei der Signalauswertung kann weitgehend auf ohnehin vorhandene Komponenten zurückgegriffen werden. Üblicherweise ist jedem der Antennenpatches, das zur Erzeugung der winkelversetzten, frequenzmodulierten Radarstrahlen dient, ein eigener Vorverstärker zugeordnet, der das niederfrequente Signal (Zwischenfrequenzsignal) des zugehörigen Mischers verstärkt. Dem für das Dopplerradar vorgesehene zusätzlichen Patch ist ein eigener Mischer zugeordnet. Zur Verstärkung des von diesem Mischer erzeugten Zwischenfrequenzsignals kann jedoch während des Betriebs des Dopplerradars einer der übrigen Vorverstärker benutzt werden. Ebenso kann die ohnehin vorhandene Hardware dazu benutzt werden, das Zwischenfrequenzsignal des Dopplerradars durch schnelle Fouriertransformation in ein Spektrum zu transformieren. Dabei brauchen lediglich die Parameter des Transformationsalgorithmus im Hinblick auf die kleinere Frequenz des Dopplerradars angepaßt zu werden. Um die Redundanz des Systems weiter zu erhöhen, ist es jedoch auch möglich, zur Berechnung des Spektrums für das Dopplerradar einen eigenen Prozessor vorzusehen.

Die nachgeschaltete Auswertungssoftware braucht lediglich um ein Modul ergänzt zu werden, das aus dem Spektrum des Dopplerradars die Relativgeschwindigkeiten der georteten Objekte berechnet und diese mit den Relativgeschwindigkeiten vergleicht, die mit Hilfe des FMCW-Radars bestimmt wurden. Bei störungsfreiem Betrieb des Radarsensors müssen sich die unabhängig voneinander bestimmten Relativgeschwindigkeiten einander konsistent zuordnen lassen. Ist dies nicht möglich, so liegt ein Fehler im System vor. Im einfachsten Fall erfolgt dann eine Systemabschaltung oder ein Neustart des Systems, verbunden mit einem Warnhinweis für den Fahrer. Falls sich der Fehler auch durch einen Neustart nicht beheben läßt, wird das System ganz abgeschaltet und der Fahrer wird durch eine entsprechende Anzeige aufgefordert, eine Werkstatt aufzusuchen.

In weiterer Ausgestaltung der Erfindung können die mit Hilfe des Dopplerradars unabhängig bestimmten Relativgeschwindigkeiten jedoch auch dazu benutzt werden, Fehler des FMCW-Radars automatisch zu korrigieren und/oder sonst nicht behebbare Zweideutigkeiten in den Ergebnissen des FMCW-Radars zu beseitigen.

### Zeichnung

Ein Ausführungsbeispiel der Erfindung ist in den Zeichnungen dargestellt und in der nachfolgenden Beschreibung näher erläutert.

Es zeigen:
- Figur 1: ein Blockdiagramm eines erfindungsgemäßen Radarsensors;
- Figur 2: ein Frequenz/Zeit-Diagramm zur Erläuterung der Arbeitsweise des Radarsensors nach Figur 1; und
- Figur 3: ein Abstands/Geschwindigkeits-Diagramm zur Erläuterung eines Verfahrens zur Auswertung der Meßergebnisse.

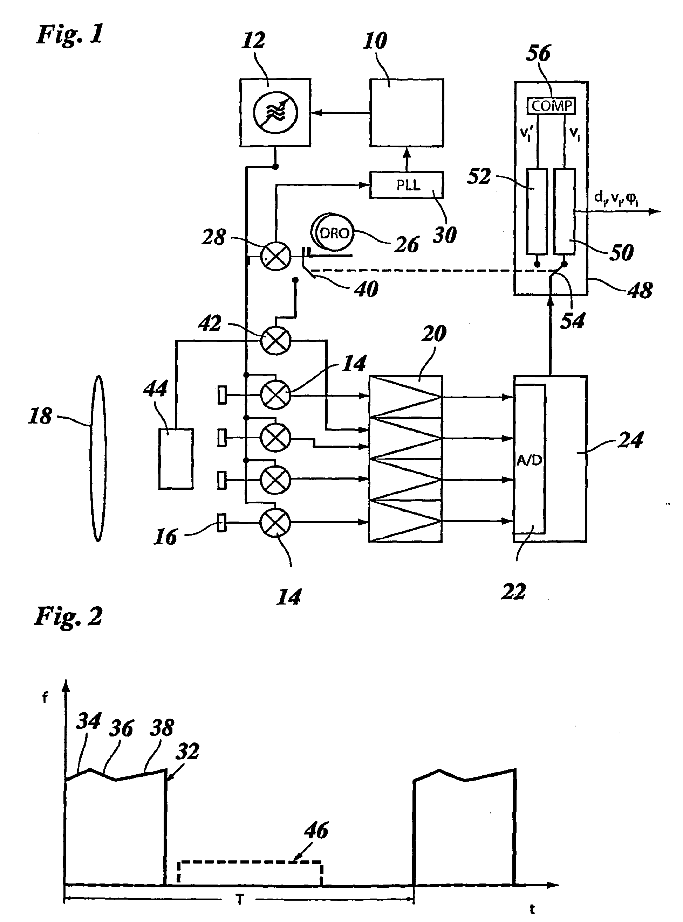

Der in Figur 1 gezeigte Radarsensor weist einen Oszillatortreiber 10 auf, der durch ein Spannungssignal die Oszillationsfrequenz eines steuerbaren Oszillators 12 steuert. Die in dieser Weise gesteuerte Frequenz des Oszillators 12 liegt in einem Arbeitsfrequenzband von etwa 76 bis 77 GHz. Das Ausgangssignal des Oszillators 12 wird mehreren, im gezeigten Beispiel vier Mischern 14 zugeführt, die jeweils mit einem Antennenpatch 16 verbunden sind. Die Antennenpatches 16, denen über die Mischer 14 das Signal des Oszillators 12 zugeführt wird, sind seitlich versetzt zueinander in der Brennebene einer Linse 18 angeordnet, so daß die von den Patches emittierte Radarstrahlung zu vier leicht gegeneinander winkelversetzten Strahlen gebündelt wird. Wenn einer dieser Strahlen auf ein Radarziel trifft, so wird das reflektierte Signal durch die Linse 18 wieder auf das Antennenpatch 16 fokussiert, das den Strahl emittiert hat. Das empfangene Signal läuft dann zum Mischer 14 zurück und wird dort mit dem Signal gemischt, das dem Mischer zu diesem Zeitpunkt vom Oszillator 12 zugeführt wird. Das so erhaltene Mischprodukt ist ein zwischenfrequenzsignal, dessen Frequenz (in der Größenordnung von etwa 100 kHz) dem Frequenzunterschied zwischen dem empfangenen Signal und dem Signal des Oszillators 12 entspricht. Die Zwischenfrequenzsignale der vier Mischer 14 werden in einem vierkanaligen Vorverstärker 20 verstärkt, in einem Analog/Digital-Wandler 22 digitalisiert und dann in einem ersten Prozessor 24 durch schnelle Fouriertransformation (FFT) in Spektren transformiert.

Die Frequenz des Oszillators 12 wird mit Hilfe des Oszillatortreibers 10 rampenförmig moduliert und dabei in einem geschlossenen Regelkreis geregelt. Zur Frequenzregelung dient ein Referenzoszillator 26, beispielsweise ein dielektrischer Resonator Oszillator (DRO), dessen Frequenz beispielsweise 1/3 der Mittenfrequenz des Arbeitsfrequenzbandes des Oszillators 12 entspricht, im hier betrachteten Beispiel also etwa 24,5 GHz. Die dritte oberwelle der Frequenz des Referenzoszillatoxs 26 wird einem harmonischen Mischer 28 zugeführt und dort mit dem Signal des Oszillators 12 gemischt. Das Mischprodukt, das somit die Differenz zwischen der aktuellen Frequenz des Oszillators 12 und der festen Frequenz des Referenzoszillators 26 angibt, wird über eine Phasenregelschleife (PLL) 30 zum Oszillatortreiber 10 zurückgeführt und dient so als Rückkopplungssignal für die Frequenzregelung.

In Figur 2 gibt die fett und in durchgezogene Linien eingezeichnete Kurve 32 die Frequenz f des Oszillators 12 in Abhängigkeit von der Zeit t an. Ein vollständiger Meßzyklus des Radarsensors hat die Periodendauer T. Am Beginn dieses Meßzyklus ist der Oszillator 12 aktiv, und seine Frequenz wird z. B. mit einer steigenden Rampe 34 moduliert. Es folgt eine fallende Rampe 36, deren Steigung dem Betrage nach der Steigung der Rampe 34 gleich sein kann. Daran schließt sich eine weitere steigende Rampe 38 an, deren Steigung z. B. nur die Hälfte der Steigung der Rampe 34 beträgt. Danach ist der Oszillator 12 für den Rest des Meßzyklus inaktiv, so daß auch der Referenzoszillator 26 nicht mehr zur Frequenzregelung benötigt wird. Mit Hilfe eines Schalters 40 (z. B. eines PIN-Dioden- oder MEM-Schalters) wird dann der Referenzoszillator 26 mit einem weiteren Mischer 42 verbunden, und über diesen Mischer wird die Grundfrequenz des Referenzoszillators zu einem zusätzlichen Antennenpatch 44 weitergeleitet, das auf der optischen Achse der Linse 18 angeordnet ist. Das Antennenpatch 44 ist größer als die Antennenpatches 16, weil es ein Radarsignal mit einer größeren Wellenlänge sendet, entsprechend der Grundfrequenz des Referenzoszillators 26. Das Antennenpatch 44 kann dabei, wie in Figur 1 symbolisch angedeutet ist, etwas vor der Brennebene der Linse 18 angeordnet sein, so daß der von diesem Patch erzeugte Radarstrahl stärker divergiert. Dieser Radarstrahl, dessen Frequenz nicht moduliert ist, ermöglicht nach dem Prinzip eines Dopplerradars die Messung der Relativgeschwindigkeiten der von ihm georteten Objekte.

Auch hier wird das Radarecho durch die Linse 18 wieder auf das Antennenpatch 44 fokussiert, und das empfangene Signal wird im Mischer 42 mit dem Signal des Referenzoszillators 26 gemischt. Das Mischprodukt wird einem der vier Kanäle des Vorverstärkers 20 hinzugeführt, vorzugsweise einem Kanal, der zu einem Antennenpatch 16 gehört, dessen Radarkeule nur wenig von der optischen Achse der Linse 18 abweicht. Das vorverstärkte Zwischenfrequenzsignal des Mischers 42 wird dann in gleicher Weise wie zuvor die Signale der Mischer 14 digitalisiert und in ein Spektrum transformiert.

In Figur 2 zeigt die gestrichelt eingezeichnete Kurve 46 die Frequenz des vom Antennenpatch 44 gesendeten Signals in Abhängigkeit von der Zeit. Es ist zu erkennen, daß die Signale der Antennenpatches 16 einerseits (Kurve 32) und des Antennenpatches 44 andererseits zeitversetzt auftreten. Wenn das Zwischenfrequenzsignal des Mischers 42 zu verstärken und auszuwerten ist, sind deshalb der Vorverstärker 20, der Analog/Digital-Wandler 22 und der erste Prozessor 24 nicht mit der Auswertung der Signale von den Antennenpatches 16 beschäftigt.

Der beschriebene Radarsensor integriert somit die Funktionen eines winkelauflösenden FMCW-Radars (Antennenpatches 16) und eines nicht-winkelauflösenden Dopplerradars (Antennenpatch 44). Die für beide Teilsysteme vom Prozessor 24 berechneten Spektren werden im gezeigten Beispiel in einen zweiten Prozessor 48 weiter ausgewertet. In jedem der vier Kanäle des FMCW-Radars erhält man in jedem Meßzyklus drei Spektren, die während der drei Rampen 34, 36 und 38 aufgenommen wurden. Jedes in dem betreffenden Kanal erfaßte Radarziel zeichnet sich in diesem Spektrum in der Form eines Peaks bei einer Frequenz ab, die sowohl vom Abstand als auch von der Relativgeschwindigkeit des Radarziels abhängig ist. Ein Modul 50 des Prozessors 48 berechnet hieraus die Abstände di und die Relativgeschwindigkeiten vᵢ der georteten Radarziele, wie später noch näher erläutert werden wird.

Da jedes Radarziel in der Regel von mehreren der vier Radarstrahlen erfaßt wird, kann außerdem durch Vergleich der Amplituden- und/oder der Phasenbeziehung zwischen den verschiedenen Kanälen im Modul 50 auch der Azimutwinkel ϕᵢ der Objekte berechnet werden.

Wenn nach dem Schließen des Schalters 40 das Dopplerradarsystem aktiv ist und das entsprechende Spektrum im Prozessor 24 berechnet wurde, wird dieses Spektrum in einem anderen Modul 52 des zweiten Prozessors 48 ausgewertet. Dies wird in Figur 1 durch einen mit dem Schalter 40 gekoppelten Schalter 54 symbolisiert, obgleich es sich in der Praxis bei dem Modul 52 um ein Softwaremodul handeln wird, das erst dann aufgerufen wird, wenn die Berechnung des Spektrums abgeschlossen ist. Auch in dem vom Dopplerradar aufgenommenen Spektrum zeichnet sich jedes der georteten Objekte durch einen Peak bei einer charakteristischen Frequenz ab, und aus dieser Frequenz läßt sich ein unabhängiger Wert vᵢ' für die Relativgeschwindigkeit des Objekts berechnen.

Unter der Prämisse, daß das Dopplerradarsystem alle Objekte erfaßt, die von den vier Radarstrahlen des FMCW-Radars zusammen erfaßt werden, muß es zu jedem vom Modul 50 berechneten Wert vᵢ einen im wesentlichen übereinstimmenden Wert vᵢ' geben. Dies wird im zweiten Prozessor 48 überprüft, wie in Figur 1 durch ein Vergleichsmodul 56 symbolisiert wird.

Bei Nichtübereinstimmung der unabhängig voneinander ermittelten Relativgeschwindigkeiten kann auf eine Fehlfunktion des Radarsensors geschlossen werden. Dabei kann es sich um einen vorübergehenden Fehler handeln, der etwa darin besteht, daß eines der vom winkelauflösenden FMCW-Radar erfaßten Objekte außerhalb des Erfassungsbereiches des Dopplerradars liegt oder umgekehrt. Wenn solche Fehler nur sporadisch auftreten, können sie ignoriert werden. Wenn sich jedoch Fälle häufen, in denen das Dopplerradar mehr Objekte ortet als das FMCW-Radar, läßt dies auf eine Teil-Erblindung des FMCW-Radars schließen, und es sollte ein Warnhinweis an den Fahrer ausgegeben werden. Entsprechend kann auch ein Ausfall oder eine Störung eines der Mischer 14 festgestellt werden.

Da die Digitalisierung der Daten des FMCW-Radars und des Dopplerradars im Analog/Digital-Wandler 22 erfolgt, werden sich auch sporadisch auftretende Digitalisierungsfehler aufgrund von Störsignalen oder dergleichen im Vergleichsmodul 56 bemerkbar machen. Auch Fehler bei der Berechnung der Spektren werden im allgemeinen zu erkennen sein, da der Algorithmus für die schnelle Fouriertransformation im Dopplerradarsystem mit anderen Parametern arbeitet als im FMCW-Radarsystem.

Schließlich können insbesondere bei schlechter Signalqualität auch Fehler bei der Berechnung der Abstände und Relativgeschwindigkeiten im Modul 50 auftreten. Insbesondere können solche Fehler auch daraus resultieren, daß die in den verschiedenen Spektren enthaltenen Peaks nicht in der richtigen Weise den realen Objekten zugeordnet werden. Dies führt zu Fehlern sowohl bei den berechneten Abständen und Azimutwinkeln als auch bei den berechneten Relativgeschwindigkeiten. Auch solche Fehler können daher im Vergleichsmodul 56 erkannt und gegebenenfalls unmittelbar korrigiert werden.

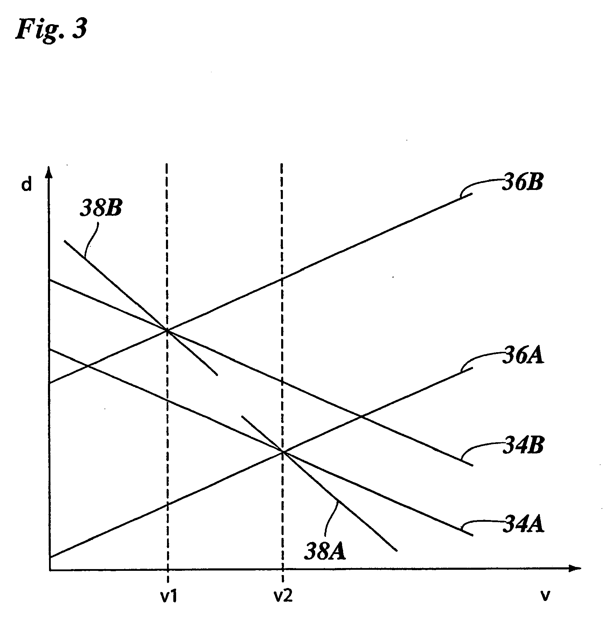

Dies soll nachstehend anhand der Figur 3 näher erläutert werden. Der Einfachheit halber soll nur einer der vier

Kanäle des FMCW-Radars betrachtet werden, und es sei ferner angenommen, daß in diesem Kanal genau zwei Radarziele geortet werden. Die drei Spektren, die für die drei Rampen 34, 36, 38 aufgenommen wurden, enthalten daher jeweils zwei Peaks bei unterschiedlichen Frequenzen. Es ist aber nicht von vornherein klar, welcher Peak zu welchem Objekt gehört.

Die Mittenfrequenz jedes Peaks definiert jedoch eine Beziehung zwischen dem Abstand d und der Relativgeschwindigkeit v des betreffenden Objekts, und diese Beziehung kann in dem Diagramm nach Figur 3 durch eine Gerade dargestellt werden. Für die Spektren, die während der steigenden Rampe 34 aufgenommen wurden, erhält man jeweils eine fallende Gerade 34A bzw. 34B, weil sich die abstands- und frequenzabhängigen Anteile an der Frequenzverschiebung addieren. Je größer die Relativgeschwindigkeit ist, desto kleiner muß daher der Abstand sein. Für die fallende Rampe 36 erhält man dementsprechend steigende Geraden 36A, 36B. Diese vier Geraden schneiden sich in vier Punkten, und das zu jedem dieser vier Punkte gehörende Wertepaar (v, d) ist ein Kandidat für ein reales Objekt. Da aber nur zwei reale Objekte vorhanden sind, wird die Mehrdeutigkeit erst dann beseitigt, wenn man noch zwei weitere Geraden 38A, 38B hinzu nimmt, die aus der Rampe 38 resultieren. Diese Geraden sind wieder fallend, verlaufen jedoch steiler, weil die Steigung der Rampe 38 kleiner ist. Im Idealfall schneiden sich jeweils drei Geraden 34A, 36A, 38A bzw. 34B, 36B, 38B in einem Punkt, der dann den Abstand und die Relativgeschwindigkeit eines realen Objekts angibt. Auf diese Weise erhält man mit Hilfe des Moduls 50 für die beiden Objekte die Relativgeschwindigkeiten v1 und v2.

Mit Hilfe des Moduls 52 muß man bei einwandfrei arbeitendem System dieselben Relativgeschwindigkeiten v1 und v2 erhalten, wie in Figur 3 durch gestrichelte vertikale Geraden symbolisiert wird.

In der Realität führen Meßfehler häufig dazu, daß sich die drei zu demselben Objekt gehörenden Geraden, beispielsweise 34A, 36A und 38A, nicht genau in einem Punkt treffen. Unter Umständen kann es daher schwierig sein zu entscheiden, welcher Punkt als Geradenschnittpunkt angenommen werden soll. Diese Entscheidung wird durch die mit Hilfe des Dopplerradars und des Moduls 52 gewonnene Zusatzinformation erheblich erleichtert.

## Patentansprüche

1. Radarsensor für Kraftfahrzeugen, mit mindestens einer Sende- und Empfangseinrichtung (14,16) zum Senden und Empfangen eines frequenzmodulierten Radarsignals und einer Auswerteeinrichtung (24, 48) zur Berechnung der Abstände (di) und Relativgeschwindigkeiten (vi) der georteten Objekte, wobei ein integriertes Dopplerradarsystem (26, 42, 44) zur unabhängigen Messung der Relativgeschwindigkeiten (vi') vorgesehen ist, **dadurch gekennzeichnet, daß** ein Referenzoszillator (26) zur Frequenzregelung des frequenzmodulierten Radarsignals zugleich einen Oszillator des Dopplerradarsystems bildet.

2. Radarsensor nach Anspruch 1, **dadurch gekennzeichnet, daß** das frequenzmodulierte Radarsignal in einem Arbeitsfrequenzband liegt, das einem ganzzahligen Vielfachen der Frequenz des Referenzoszillators (26) entspricht.

3. Radarsensor nach Anspruch 1 oder 2, **dadurch gekennzeichnet, daß** er dazu ausgebildet ist, die Radarmessungen zyklisch zu wiederholen und das frequenzmodulierte Radarsignal während jedes Meßzyklus nur während eines Teils der Dauer (T) dieses Meßzyklus zu erzeugen, und daß ein Schalter (40) dazu vorgesehen ist, den Referenzoszillator (26) während der Zeit, in der das frequenzmodulierte Radarsignal nicht erzeugt wird, mit der Sende- und Empfangseinrichtung für das Dopplerradar zu verbinden.

4. Radarsensor nach einem der vorstehenden Ansprüche, **dadurch gekennzeichnet, daß** die Sende- und Empfangseinrichtung ein oder mehrere Antennenpatches (16) zum Emittieren des frequenzmodulierten Radarsignals aufweist und daß für das Dopplerradarsystem ein gesondertes Antennenpatch (44) vorgesehen ist.

5. Radarsensor nach Anspruch 4, **dadurch gekennzeichnet, daß** die Antennenpatches (16) für das frequenzmodulierte Radarsignal und das Antennenpatch (44) des Dopplerradarsystems vor einer gemeinsamen Linse (18) angeordnet sind.

6. Radarsensor nach Anspruch 4 oder 5, **dadurch gekennzeichnet, daß** dem oder den Antennenpatches (16) für das frequenzmodulierte Radarsignal jeweils ein Mischer (14) zum Mischen des empfangenen Signals mit dem gesendeten Signal zugeordnet ist und Zwischenfrequenzausgänge dieser Mischer (14) mit einem Vorverstärker (20) verbunden sind, der so viel Kanäle aufweist, wie Mischer (14) für das frequenzmodulierte Radarsignal vorhanden sind, und daß dem Antennenpatch (44) für das Dopplerradar ein weiterer Mischer (42) zugeordnet ist, dessen Zwischenfrequenzausgang auf einen der Kanäle des Vorverstärkers (20) geschaltet ist.

7. Radarsensor nach einem der vorstehenden Ansprüche, **dadurch gekennzeichnet, daß** die Auswerteeinrichtung (24, 48) ein Modul (50) zur Berechnung der Abstände (di, vi) der Objekte auf der Grundlage des frequenzmodulierten Radarsignals, ein Modul (52) zur Berechnung der Relativgeschwindigkeiten (vi') der Objekte auf der Grundlage des Dopplerradarsystems und ein Vergleichsmodul (56) zum Vergleich der von den Modulen (50, 52) berechneten Relativgeschwindigkeiten (vi, vi') aufweist.

## Claims

1. Radar sensor for motor vehicles, having at least one transmission and reception device (14, 16) for sending and receiving a frequency-modulated radar signal and an evaluation device (24, 48) for calculating the distances (di) and relative speeds (vi) of the located objects, wherein an integrated Doppler radar system (26, 42, 44) is provided for independent measurement of the relative speeds (vi'), **characterized in that** a reference oscillator (26) for regulating the frequency of the frequency-modulated radar signal forms an oscillator for the Doppler radar system at the same time.

2. Radar sensor according to Claim 1, **characterized in that** the frequency-modulated radar signal is situated in an operating frequency band which corresponds to an integer multiple of the frequency of the reference oscillator (26).

3. Radar sensor according to Claim 1 or 2, **characterized in that** it is designed to cyclically repeat the radar measurements and to produce the frequency-modulated radar signal during each measurement cycle only during a portion of the duration (T) of said measurement cycle, and **in that** a switch (40) is provided for the purpose of connecting the reference oscillator (26) to the transmission and reception device for the Doppler radar during the time in which the frequency-modulated radar signal is not being produced.

4. Radar sensor according to one of the preceding claims, **characterized in that** the transmission and reception device has one or more antenna patches (16) for emitting the frequency-modulated radar signal and **in that** a separate antenna patch (44) is provided for the Doppler radar system.

5. Radar sensor according to Claim 4, **characterized in that** the antenna patches (16) for the frequency-modulated radar signal and the antenna patch (44) for the Doppler radar system are arranged in front of a common lens (18).

6. Radar sensor according to Claim 4 or 5, **characterized in that** the antenna patches (16) for the frequency-modulated radar signal has/have a respective associated mixer (14) for mixing the received signal with the sent signal, and intermediate-frequency outputs of said mixers (14) are connected to a preamplifier (20) which has as many channels as there are mixers (14) for the frequency-modulated radar signal, and **in that** the antenna patch (44) for the Doppler radar has a further associated mixer (42), the intermediate-frequency output of which is connected to one of the channels of preamplifier (20).

7. Radar sensor according to one of the preceding claims, **characterized in that** the evaluation device (24, 48) has a module (50) for calculating the distances (di, vi) of the objects on the basis of the frequency-modulated radar signal, a module (52) for calculating the relative speeds (vi') of the objects on the basis of the Doppler radar system, and a comparison module (56) for comparing the relative speeds (vi, vi') calculated by the modules (50, 52).

## Revendications

1. Capteur radar pour véhicules automobiles, comprenant au moins un dispositif d'émission et de réception (14, 16) pour émettre et recevoir un signal radar modulé en fréquence et un dispositif d'interprétation (24, 48) pour calculer les écarts (di) et les vitesses relatives (vi) des objets localisés, un système de radar Doppler (26, 42, 44) intégré étant prévu pour la mesure indépendante des vitesses relatives (vi'), **caractérisé en ce qu'**un oscillateur de référence (26) destiné à la régulation en fréquence du signal radar modulé en fréquence forme en même temps un oscillateur du système de radar Doppler.

2. Capteur radar selon la revendication 1, **caractérisé en ce que** le signal radar modulé en fréquence se trouve dans une bande de fréquences de fonctionnement qui correspond à un multiple entier de la fréquence de l'oscillateur de référence (26).

3. Capteur radar selon la revendication 1 ou 2, **caractérisé en ce qu'**il est configuré pour répéter cycliquement les mesures au radar et pour générer le signal radar modulé en fréquence pendant chaque cycle de mesure seulement pendant une partie de la durée (T) de ce cycle de mesure, et **en ce qu'**un commutateur (40) est prévu pour relier l'oscillateur de référence (26) avec le dispositif d'émission et de réception pour le radar Doppler pendant la période au cours de laquelle le signal radar modulé en fréquence n'est pas généré.

4. Capteur radar selon l'une des revendications précédentes, **caractérisé en ce que** le dispositif d'émission et de réception présente une ou plusieurs antennes planaires (16) pour émettre le signal radar modulé en fréquence et **en ce qu'**une antenne planaire (44) séparée est prévue pour le système de radar Doppler.

5. Capteur radar selon la revendication 4, **caractérisé en ce que** les antennes planaires (16) pour le signal radar modulé en fréquence et l'antenne planaire (44) du système de radar Doppler sont disposées devant une lentille (18) commune.

6. Capteur radar selon la revendication 4 ou 5, **caractérisé en ce qu'**un mélangeur (14) est à chaque fois associé avec la ou les antennes planaires (16) pour le signal radar modulé en fréquence pour mélanger le signal reçu avec le signal émis et les sorties de fréquence intermédiaire de ce mélangeur (14) sont reliées avec un préamplificateur (20) qui présente autant de canaux qu'il existe de mélangeurs (14) pour le signal radar modulé en fréquence, et **en ce qu'**un mélangeur (42) supplémentaire est associé à l'antenne planaire (44) pour le système de radar Doppler, dont la sortie de fréquence intermédiaire est connectée à l'un des canaux du préamplificateur (20).

7. Capteur radar selon l'une des revendications précédentes, **caractérisé en ce que** le dispositif d'interprétation (24, 48) présente un module (50) pour calculer les écarts (di, vi) des objets en se basant sur le signal radar modulé en fréquence, un module (52) pour calculer les vitesses relatives (vi') des objets en se basant sur le système de radar Doppler et un module comparateur (56) pour comparer les vitesses relatives (vi, vi') calculées par les modules (50, 52).
